# FASCICULE DE BREVET EUROPEEN

(11) **EP 1 780 078 B1**
(45) Date de publication et mention de la délivrance du brevet: **20.04.2011**
(21) Numéro de dépôt: 06024685.7
(22) Date de dépôt: 15.09.2003
(51) Int. Cl.: B60Q 1/04

(54) **Projecteur de véhicle automobile comportant des moyens déformables propres à absorber au moins une partie de l'énergie d'un choc**
Kfz-Scheinwerfer mit verformbaren Mitteln zur Absorption mindestens eines Teils der Energie beim einem Aufprall
Vehicle headlamp with means that can be deformed to absorb at least part of the energy from an impact

(30) Priorité: 20.09.2002 FR 0211705
(43) Date de publication de la demande: 02.05.2007
(62) Demande divisionnaire de: 03292271.8
(73) Titulaire: VALEO VISION, 93012 Bobigny Cedex (FR)
(72) Inventeur: Arlon, Philippe, 93012 Bobigny Cedex (FR)
(74) Mandataire: Tran, Chi-Hai

(56) Documents cités:
- EP-A- 1 059 200
- EP-A- 1 120 309
- EP-A- 1 231 108
- DE-A- 10 101 789
- DE-A- 10 143 676
- US-A1- 2001 040 811
- US-A1- 2001 046 140

## Description

La présente invention concerne un projecteur de véhicule automobile comportant un boîtier renfermant une source lumineuse et un réflecteur, ainsi qu'une glace de protection montée sur le boîtier et propre à transmettre la lumière émise par la source.

Les constructeurs ont depuis longtemps constaté que les projecteurs jouent, par leur localisation, un grand rôle dans la sécurité passive des véhicules automobiles, en particulier vis-à-vis des piétons, qui sont souvent victimes d'accidents de la route.

Au cours d'un choc piéton, il est fréquent que le piéton heurte un projecteur. Aussi certains constructeurs ont-ils décidé de doter les projecteurs de moyens d'absorption de l'énergie du choc. Un projecteur comportant des moyens d'absorption est présenté dans la demande de brevet européen publiée sous le numéro EP-1 059 200.

Toutefois, une telle dotation exige en général une révision en profondeur du projecteur. En particulier, des pièces supplémentaires sont nécessaires, telles que des pièces de guidage, ce qui présente des inconvénients en termes d'encombrement et de poids, et de coût.

Il s'avère également nécessaire de prévoir, autour du projecteur, des espaces vides pour permettre la déformation de celui-ci au cours du choc, ce qui grève encore l'encombrement du projecteur, tandis que les constructeurs privilégient par ailleurs la compacité du compartiment moteur.

L'invention vise notamment à pallier les inconvénients précités en proposant un projecteur qui, tout en assurant une sécurité passive optimale, notamment vis-à-vis des piétons, soit d'un encombrement relativement réduit, et comporte notamment un nombre de pièces limité. Subsidiairement, l'invention vise à trouver un projecteur assurant la sécurité optimale vis à vis des piétons, tout en limitant au maximum le nombre de pièces additionnels à ajouter, tout particulièrement hors du projecteur.

Il est connu des documents US 2001/0040811 et US 2001/0046140 un projecteur automobile utilisant un masque flexible susceptible de fléchir quand le projecteur subit un choc extérieur.

A cet effet, l'invention propose un projecteur de véhicule automobile selon la revendication 1.

On limite ainsi le nombre de pièces fonctionnelles au sein du projecteur, au bénéfice de son encombrement et de son poids.

L'inertie du projecteur étant réduite, il en résulte une diminution des efforts subis par le piéton lors du choc.

Suivant un mode de réalisation où le projecteur comporte un masque disposé dans le volume délimité conjointement par le boîtier et la glace, les moyens déformables sont interposés entre le masque et le boîtier.

Les moyens déformables forment au moins en partie un masque qui recouvre le bord avant du réflecteur.

Suivant un mode de réalisation, les moyens déformables sont réalisés dans un matériau compressible tel qu'une une mousse. Il s'agit par exemple d'un polypropylène expansé, qui, tout en étant léger, peut être aisément mis en forme et présente de bonnes capacités d'absorption d'énergie.

Les moyens déformables comportent, par exemple, au moins un élément annulaire ou à section en U ou en V, réalisé dans un matériau compressible et qui peut être disposé dans un logement complémentaire ménagé dans le boîtier. Ces moyens déformables peuvent être réalisés en une pièce ou en plusieurs pièces. Dans le cas où il y a plusieurs pièces, elles peuvent être jointives ou non, et être éventuellement sous forme de portions d'anneau ou d'élément en U ou en V.

En outre, la glace peut quant à elle comporter des moyens frangibles aptes à absorber au moins une partie de l'énergie du choc subi par le projecteur, ce qui accroît encore les capacités d'absorption d'énergie du projecteur.

Ainsi, suivant l'invention la glace est munie d'une partie de raccordement au boîtier, qui comporte au moins une zone de rupture prédéterminée.

Cette partie de raccordement présente au moins deux parties raccordées par une ligne de moindre épaisseur, emboîtables après rupture de celle-ci.

L'invention sera mieux comprise à la lecture de la description qui va suivre, donnée uniquement à titre d'exemple et faite en référence aux dessins annexés dans lesquels :
- la figure 1 est une vue d'élévation en coupe d'un projecteur de véhicule automobile selon un mode de réalisation qui n'est pas couvert par les revendications de la présente demande;
- la figure 2 est une vue analogue à la figure 1, suivant l'invention ;
- la figure 3 est une vue en perspective d'un projecteur de véhicule automobile tel que représenté sur les figures 1 et 2, selon un mode de réalisation où il comporte une glace fusible ;
- la figure 4 est une vue schématique d'élévation en coupe du projecteur de la figure 3, où, pour des raisons de commodité, seuls sont représentés le boîtier et la glace du projecteur.

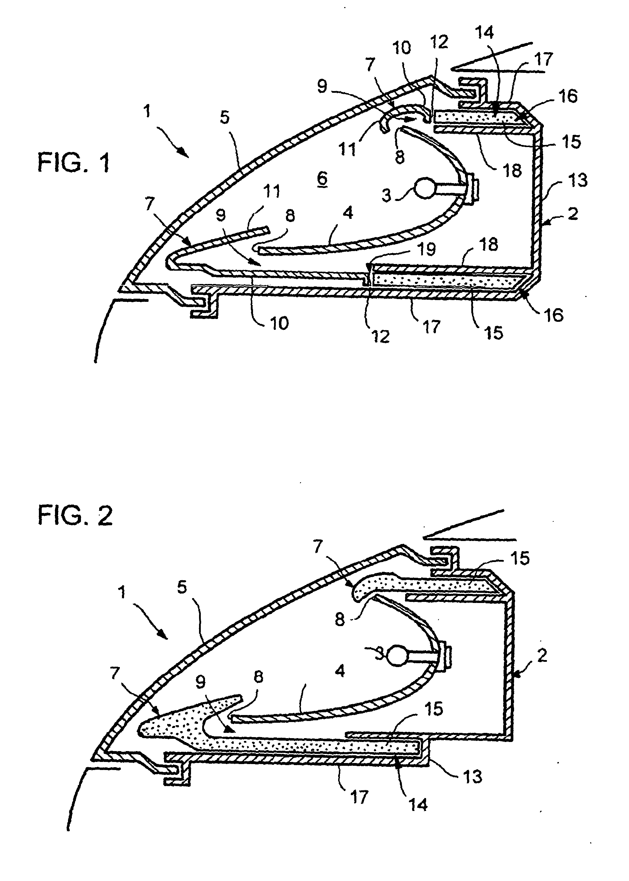

Sur la figure 1 est représenté un projecteur 1 de véhicule automobile comportant un boîtier 2 renfermant un certain nombre de composants internes, parmi lesquels une source lumineuse 3 et un réflecteur 4 sur lequel est montée la source 3 dont il réfléchit et diffuse la lumière.

Le projecteur 1 comporte également une glace 5 montée sur le boîtier 2, qu'elle referme à la manière d'un couvercle pour protéger les composants internes 3, 4 tout en transmettant la lumière émise par la source 3.

La glace 5 délimite, conjointement avec le boîtier 2, un volume interne 6 dans lequel sont disposés les composants internes 3, 4. Dans le volume interne 6 est également disposé un masque 7 annulaire qui vient recouvrir le bord avant 8 du réflecteur 4 pour combler visuellement l'espace 9 entre celui-ci et le boîtier 2, et ainsi améliorer l'esthétique du projecteur 1.

Comme on peut le voir sur la figure 1, le masque 7 comporte une portion externe annulaire 10 qui entoure le réflecteur 4, prolongée vers l'avant par une portion interne 11 sensiblement conique, recourbée vers l'arrière, qui chevauche le réflecteur 4. La portion externe 10 du masque 7 se termine, du côté opposé à la portion interne 11, par un bord arrière 12 tourné vers une paroi arrière 13 du boîtier 2.

De la sorte, outre son aspect décoratif, le masque 7, qui ne présente aucune arête tournée vers ia glace 5, protège un piéton des coupures dont il pourrait être victime en venant heurter, lors d'un choc avec le projecteur 1, le bord avant 8 du réflecteur 4.

Afin d'optimiser la sécurité du piéton en cas de choc, le projecteur 1 comporte en outre des moyens déformables 14, interposés entre le masque 7 et le boîtier, et aptes à absorber au moins une partie de l'énergie d'un choc subi par le projecteur 1.

Plus précisément, tel que représenté sur la figure 1, ces moyens déformables 14 comportent un élément 15 réalisé dans un matériau compressible, qui s'étend entre le bord arrière 12 du masque 7 et la paroi arrière 13 du boîtier 2.

Les moyens déformables 14 comportent un unique élément 15 annulaire, monobloc, réalisé dans une mousse, par exemple une mousse de polyuréthane et//ou en polypropylène expansé, et disposé au moins en partie (ici complètement) dans un logement complémentaire 16 ménagé dans le boîtier 2.

Ce logement 16 est délimité, vers l'arrière, par la paroi arrière 13 du boîtier 2, vers l'extérieur, par une paroi externe 17 du boîtier et, vers l'intérieur, par une cloison 18 saillant de la paroi arrière 13 et concentrique à la paroi externe 17.

Le logement 16 présente vers l'avant une ouverture 19 tournée vers la glace 5. Le bord arrière 12 du masque est 7 placé en face et à proximité immédiate de cette ouverture 19, refermant ainsi le logement 16.

Lors d'un choc avec un obstacle, l'obstacle vient heurter la glace 5 qu'il repousse vers l'arrière. En se déformant, la glace 5 vient s'appuyer sur le masque 7 qui, en reculant, vient s'appuyer contre l'élément amortissant 15 qui se rétracte alors en absorbant une partie au moins de l'énergie du choc. On a donc une transmission de l'énergie du choc de la glace au masque puis du masque à l'élément amortissant. En l'occurrence, l'élément amortissant est guidé, lors de son recul, par son logement 16.

Le logement 16 est optionnel, la tenue de l'élément 15 pouvant être réalisée par son introduction à force dans le boîtier 2. L'élément 15 peut par exemple présenter une section en forme de U, ce qui peut suffire à assurer sa tenue dans le boîtier 2.

Par ailleurs, bien qu'un unique élément 15 soit ici prévu, il est envisageable d'en prévoir plusieurs, qui sont associés: par exemple en les superposant, ou en les disposant l'un derrière l'autre, ou côte à côte, notamment en fonction de l'espace disponible dans le projecteur 1.

La portion externe 10 du masque 7 pénètre alors dans le logement 16 où elle coulisse en repoussant l'élément compressible 15, le mouvement de recul du masque 7 étant ainsi guidé lors du choc.

La déformation du projecteur 1 est donc contrôlée, de sorte que, lors du choc, le masque 7 recouvre en permanence le bord avant 8 du réflecteur 4.

Suivant l'invention, le masque 7 fait partie des moyens déformables 14. Ainsi, comme cela est représenté sur la figure 2, le masque 7 et l'élément compressible 15 ne forment qu'une seule et même pièce réalisée, dans un matériau compressible tel qu'une mousse de polyuréthane ou un polypropylène expansé, qui recouvre le bord avant 8 du réflecteur 4.

Il en résulte une plus grande capacité d'absorption de l'énergie du choc, le masque 7 se déformant dans sa partie avant, dès que la glace 5 vient s'appuyer contre lui, puis dans sa partie arrière qui se trouve comprimée contre le boîtier 2.

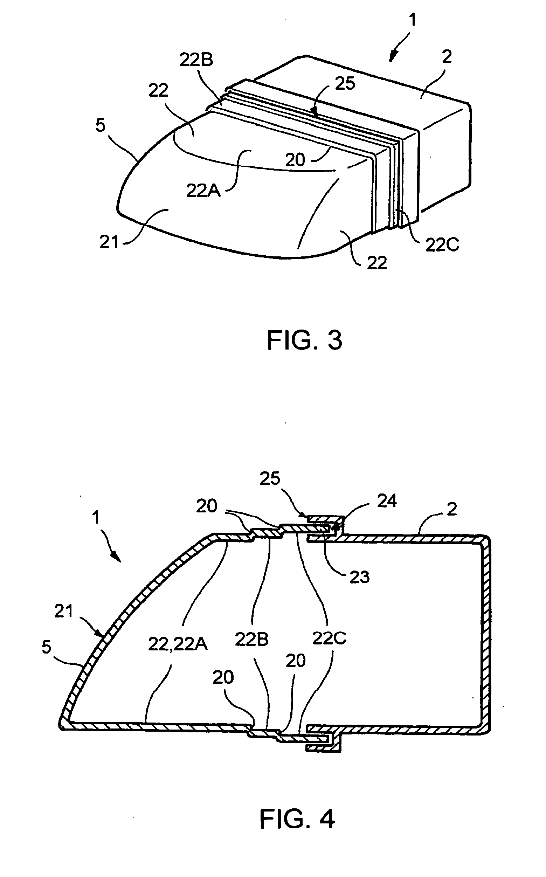

Par ailleurs, comme cela est représenté sur les figures 3 et 4, il est possible d'accroître la capacité d'absorption d'énergie du projecteur 1 à l'aide de moyens frangibles 20 prévus sur la glace 5, aptes à absorber, lors de leur rupture, au moins une partie de l'énergie d'un choc subi par le projecteur 1.

La glace 5 comporte une paroi avant 21, bordée latéralement par une tranche 22 par laquelle la glace 5 est raccordée au boîtier 2. Plus précisément, la tranche 22 présente, à l'opposé de la paroi avant 21, un bord arrière 23 reçu dans une rainure 24 formée sur un bord avant 25 du boîtier 2.

La tranche 22 de la glace 5 est déformable : elle comporte en effet au moins une zone de rupture prédéterminée formant les moyens frangibles 20 précités.

En pratique, la tranche 22 de la glace 5 comporte au moins deux parties gigognes 22A, 22B, raccordées par une ligne de moindre épaisseur 20. Selon un mode de réalisation représenté sur les figures 3 et 4, trois parties gigognes successives 22A, 22B, 22C sont prévues, reliées deux à deux par une ligne de moindre épaisseur 20.

Un choc frontal subi par le projecteur provoque le recul de la paroi avant 21, entraînant la rupture successive des lignes de moindre épaisseur 20, et l'emboîtement des parties gigognes 22A, 22B, 22C.

Etant guidée dans son recul, la glace 5 se déforme de manière prédéterminée. Il en résulte une répartition uniforme de l'effort qu'elle communique au masque 7 lorsqu'elle vient le heurter après avoir déjà avoir absorbé une partie de l'énergie du choc. L'élément compressible 15 s'enfonce alors à son tour, de la manière décrite ci-dessus, en complétant l'absorption d'énergie du choc.

## Revendications

1. Projecteur de véhicule automobile comportant un boîtier (2) renfermant une source lumineuse (3) et un réflecteur (4), une glace (5) de protection montée sur le boîtier (2) et propre à transmettre la lumière émise par la source (3), comportant en outre des moyens (14) déformables interposés entre la glace (5) et le boîtier (2), aptes à absorber au moins une partie de l'énergie d'un choc subi par le projecteur (1), lesdits moyens déformables (14) formant au moins en partie un masque (7) qui recouvre le bord avant du réflecteur (4), **caractérisé en ce que** la glace (5) comporte des moyens frangibles (20) aptes à absorber au moins une partie de l'énergie du choc subi par le projecteur (1) la glace (5) étant munie d'une partie (22) de raccordement au boîtier (2), cette partie de raccordement (22) comportant au moins une zone (20) de rupture prédéterminée et présentant au moins deux parties (22A, 22B, 22C) raccordées par une ligne de moindre épaisseur (20), emboîtables après rupture de ladite ligne (20).

2. Projecteur selon la revendication 1, **caractérisé en ce que** le masque (7) disposé dans le volume (6) délimité conjointement par le boîtier (2) et la glace (5).

3. Projecteur selon l'une des revendications 1 à 2, **caractérisé en ce que** les moyens déformables (14) sont réalisés dans un matériau compressible.

4. Projecteur selon la revendication 3, **caractérisé en ce que** les moyens déformables (14) sont réalisés dans une mousse.

5. Projecteur selon la revendication 4, **caractérisé en ce que** les moyens déformables (14) sont réalisés dans un polypropylène expansé et/ou un polyuréthane.

6. Projecteur selon l'une des revendications 1 à 5, **caractérisé en ce que** les moyens déformables (14) comportent au moins un élément (15) annulaire ou à section en U, réalisé dans un matériau compressible.

7. Projecteur selon l'une des revendications précédentes, **caractérisé en ce que** les moyens déformables (14) sont au moins en partie disposés dans un logement (16) complémentaire ménagé dans le boîtier (2).

## Claims

1. Motor vehicle headlight, comprising a housing (2) which contains a source of light (3) and a reflector (4), protective glass (5) which is fitted on the housing (2), and can transmit the light which is emitted by the source (3), additionally comprising deformable means (14) which are interposed between the glass (5) and the housing (2), and can absorb at least part of the energy of an impact sustained by the headlight (1), the said deformable means (14) forming at least partly a shield (7) which covers the front edge of the reflector (4), **characterised in that** the glass (5) comprises breakable means (20) which can absorb at least part of the energy of the impact sustained by the headlight (1), the glass (5) being provided with a part (22) for connection to the housing (2), this connection part (22) comprising at least one predetermined area (20) of rupture, and having at least two parts (22A, 22B, 22C) which are connected by a line with reduced thickness (20), which parts can be nested after the said line (20) has broken.

2. Headlight according to claim 1, **characterised in that** the shield (7) is disposed in the volume (6) delimited jointly by the housing (2) and the glass (5).

3. Headlight according to one of claims 1 or 2, **characterised in that** the deformable means (14) are made of a compressible material.

4. Headlight according to claim 3, **characterised in that** the deformable means (14) are made of a foam.

5. Headlight according to claim 4, **characterised in that** the deformable means (14) are made of an expanded polypropylene and/or a polyurethane.

6. Headlight according to one of claims 1 to 5, **characterised in that** the deformable means (14) comprise at least one element (15) which is annular, or has a cross-section in the form of a "U", and is made of a compressible material.

7. Headlight according to one of the preceding claims, **characterised in that** the deformable means (14) are at least partly disposed in a complementary receptacle (16) which is provided in the housing (2).

## Patentansprüche

1. Kraftfahrzeugscheinwerfer mit einem Gehäuse (2), das eine Lichtquelle (3) und einen Reflektor (4) umschließt, einer Schutzscheibe (5), die auf dem Gehäuse (2) angebracht ist und das von der Lichtquelle (3) ausgesandte Licht zu übertragen vermag, ferner mit verformbaren Mitteln (14), die zwischen der Scheibe (5) und dem Gehäuse (2) eingefügt sind und wenigstens einen Teil der Energie eines Stoßes auf den Scheinwerfer (1) aufzunehmen vermögen, wobei die verformbaren Mittel (14) wenigstens zum Teil eine Abdeckung (7) bilden, die den vorderen Rand des Reflektors (4) verdeckt, **dadurch gekennzeichnet, dass** die Scheibe (5) zerbrechbare Mittel (20) aufweist, die wenigstens einen Teil der Energie des Stoßes auf den Scheinwerfer (1) aufzunehmen vermögen, wobei die Scheibe (5) mit einem Stück (22) zum Verbinden mit dem Gehäuse (2) versehen ist, wobei dieses Verbindungsstück (22) wenigstens einen vorbestimmten Bruchbereich (20) aufweist und wenigstens zwei Teile (22A, 22B, 22C) aufweist, die durch eine Linie (20) geringerer Dicke miteinander verbunden sind und nach Bruch dieser Linie (20) zusammenschiebbar sind.

2. Scheinwerfer nach Anspruch 1, **dadurch gekennzeichnet, dass** die Abdeckung (7) in dem vom Gehäuse (2) und der Scheibe (5) gemeinsam umgrenzten Raum (6) angeordnet ist.

3. Scheinwerfer nach einem der Ansprüche 1 bis 2, **dadurch gekennzeichnet, dass** die verformbaren Mittel (14) aus einem komprimierbaren Material ausgeführt sind.

4. Scheinwerfer nach Anspruch 3, **dadurch gekennzeichnet, dass** die verformbaren Mittel (14) aus einem Schaumstoff ausgeführt sind.

5. Scheinwerfer nach Anspruch 4, **dadurch gekennzeichnet, dass** die verformbaren Mittel (14) aus expandiertem Polypropylen und/oder Polyurethan ausgeführt sind.

6. Scheinwerfer nach einem der Ansprüche 1 bis 5, **dadurch gekennzeichnet, dass** die verformbaren Mittel (14) wenigstens ein Element (15) in Ringform oder mit U-förmigem Querschnitt aufweisen, das aus einem komprimierbaren Material ausgeführt ist.

7. Scheinwerfer nach einem der vorhergehenden Ansprüche, **dadurch gekennzeichnet, dass** die verformbaren Mittel (14) wenigstens zum Teil in einer in dem Gehäuse (2) ausgeführten komplementären Aufnahme (16) angeordnet sind.
